(19) Europäisches Patentamt
European Patent Office
Office européen des brevets

(11) **EP 2 181 013 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(21) Anmeldenummer: **08785967.4**

(22) Anmeldetag: **08.07.2008**

(51) Int Cl.:
*B60K 35/00* (2006.01)   *B60K 37/02* (2006.01)
*G02B 27/22* (2006.01)

(86) Internationale Anmeldenummer:
**PCT/EP2008/058842**

(87) Internationale Veröffentlichungsnummer:
**WO 2009/024400 (26.02.2009 Gazette 2009/09)**

(54) **VERFAHREN ZUM ANZEIGEN VON INFORMATIONEN IN EINEM FAHRZEUG UND ANZEIGEEINRICHTUNG FÜR EIN FAHRZEUG**

METHOD FOR DISPLAYING INFORMATION IN A VEHICLE, AND DISPLAY DEVICE FOR A VEHICLE

PROCÉDÉ D'AFFICHAGE D'INFORMATIONS DANS UN VÉHICULE ET DISPOSITIF D'AFFICHAGE POUR UN VÉHICULE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.08.2007   DE 102007039442**

(43) Veröffentlichungstag der Anmeldung:
**05.05.2010   Patentblatt 2010/18**

(73) Patentinhaber: **Volkswagen AG**
**38436 Wolfsburg (DE)**

(72) Erfinder:
• **WÄLLER, Christoph**
**38102 Braunschweig (DE)**
• **LEMKE, Katja**
**38124 Braunschweig (DE)**
• **DEHMANN, Rainer**
**10961 Berlin (DE)**
• **KUHN, Mathias**
**14129 Berlin (DE)**

(74) Vertreter: **Reitstötter - Kinzebach**
**Patentanwälte**
**Sternwartstrasse 4**
**81679 München (DE)**

(56) Entgegenhaltungen:
WO-A-00/04440       WO-A-2006/108617
DE-A1- 10 118 765   GB-A- 2 434 068

**Beschreibung**

Die vorliegende Erfindung betrifft ein Verfahren zum Anzeigen von Informationen in einem Kraftfahrzeug, bei dem mehrere Objekte mittels eines in dem Kraftfahrzeug befestigten Displays grafisch dargestellt werden. Ferner betrifft die Erfindung eine Anzeigeeinrichtung für ein Kraftfahrzeug mit einem Display zur grafischen Darstellung von Informationen, das in dem Kraftfahrzeug befestigt ist, einer Benutzerschnittstelleneinrichtung, mit welcher Grafikdaten für auf dem Display darstellbare Objekte erzeugbar sind, und einer mit der Benutzerschnittstelleneinrichtung gekoppelten Eingabeeinrichtung.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombiinstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Ein solches Multifunktionsbedienelement ist beispielsweise in der DE 199 41 955 A1 beschrieben.

Das dokument WO2006/108617 A2 beschrieb ein Verfahren zum Darstellen von Informationen auf einer drehenden Walze.

Um die vielfältigen Bedien- und Anzeigemöglichkeiten übersichtlich darzustellen, werden häufig hierarchische Menüstrukturen verwendet. Ein Menü zeigt verschiedene Menüpunkte und gegebenenfalls den Menüpunkten zugeordnete Grafiken oder Icons an. Bei der Auswahl eines Menüpunkts öffnet sich ein Untermenü mit weiteren Untermenüpunkten. Diese Struktur kann über mehrere Hierarchieebenen fortgeführt werden. Außerdem kann einem Menüpunkt anstatt eines Untermenüs ein bestimmtes Anzeigebild zugeordnet sein, welches die dem Menüpunkt zugeordnete Information dargestellt.

Werden solche Menüstrukturen in einem Kraftfahrzeug eingesetzt, ergibt sich das Problem, dass die Navigation innerhalb dieser Menüstrukturen und die Aufnahme der von dem Display angezeigten Informationen die Aufmerksamkeit des Fahrers derart beanspruchen, dass das gleichzeitige sichere Führen des Kraftfahrzeugs durch den Fahrer nicht mehr möglich ist. Will somit der Fahrer Einrichtungen des Fahrzeugs, deren Informationen über die Anzeigeeinrichtung dargestellt werden, bedienen, sollte er dies vor dem Beginn einer Fahrt tun oder die Fahrt für die Bedienung unterbrechen. Derartige Beeinträchtigungen für die Bedienung sind jedoch unerwünscht. Sie führen vielfach dazu, dass der Fahrer die Einrichtungen des Fahrzeugs während der Fahrt bedient, obwohl dies zu einer Ablenkung führt, die ein Sicherheitsrisiko darstellen kann.

Es ist daher wünschenswert, die Informationen im Kraftfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann, selbst wenn von der Anzeigeeinrichtung gegebenenfalls komplexe hierarchische Strukturen darstellbar sind. Die Informationsdarstellung und die mit einer Informationsdarstellung verbundene Bedienung in dem Kraftfahrzeug trägt somit zur Sicherheit beim Führen des Kraftfahrzeugs bei.

Es ist die Aufgabe der vorliegenden Erfindung, ein Verfahren und eine Anzeigeeinrichtung der eingangs genannten Art bereitzustellen, bei denen die dargestellte Information so schnell und intuitiv wie möglich erfassbar ist und die eine schnelle, intuitive und einfache Bedienung von Fahrzeugeinrichtungen ermöglichen, deren Informationen dargestellt werden.

Erfindungsgemäß wird diese Aufgabe durch ein Verfahren mit den Merkmalen des Anspruchs 1 und einer Anzeigeeinrichtung mit den Merkmalen des Anspruchs 8 gelöst. Vorteilhafte Aus- und Weiterbildungen ergeben sich aus den Unteransprüchen.

Das erfindungsgemäße Verfahren ist dadurch gekennzeichnet, dass von einer Benutzerschnittstelleneinrichtung Grafikdaten erzeugt werden, die das Display so ansteuern, dass die Objekte auf einem virtuellen, perspektivisch dargestellten Ring angeordnet dargestellt werden, und dass auf eine Eingabe mittels einer Eingabeeinrichtung eine Recheneinheit der Benutzerschnittstelleneinrichtung die Grafikdaten so verändert, dass sich die Objekte auf dem virtuellen Ring karussellartig drehen. Der virtuelle Ring wird insbesondere perspektivisch dreidimensional in einer Ansicht von schräg oben dargestellt, so dass nicht nur die Objekte auf dem vorderen Abschnitt des virtuellen Rings sichtbar sind sondern auch Objekte auf der hinteren Seite des virtuellen Rings.

Unter dem Begriff "drehen" wird im Sinne der Erfindung verstanden, dass der virtuelle Ring gedreht wird. Da der dreidimensionale virtuelle Ring auf dem Display in einer zweidimensionalen perspektivischen Darstellung wiedergegeben wird, werden die Objekte hinsichtlich ihrer Position auf dem Display tatsächlich verschoben.

Die Darstellung der Objekte auf einem virtuellen Ring hat den Vorteil, dass sich der Betrachter, auch wenn eine Vielzahl von Objekten grafisch dargestellt wird, sehr leicht und schnell zurechtfindet und somit die Sicherheit des Fahrzeugs auch dann nicht beeinträchtigt wird, wenn der Fahrer die von dem Display dargestellte Information während der Fahrt aufnimmt und gegebenenfalls die den Objekten zugeordneten Fahrzeugeinrichtungen bedient.

Gemäß einer bevorzugten Weiterbildung des erfindungsgemäßen Verfahrens wird mittels der Eingabeeinrichtung eine Linie auf dem Display eingegeben. Der Winkel, um den die Objekte gedreht werden, wird dann wie folgt berechnet:

$$\alpha_{Drehung} = \frac{S}{B} \cdot 360° \quad ,$$

wobei

$\alpha_{Drehung}$ der Gesamtdrehwinkel in Grad ist,
S die Länge der mittels der Eingabeeinrichtung definierten Linie ist und
B die Breite des Displays ist.

Vorzugsweise wird von der mittels der Eingabeeinrichtung definierten Linie nur die Länge der parallel zur Breite des Displays ausgerichteten Horizontalkomponente für den Parameter S verwendet. Von der über die Eingabeeinrichtung eingegebene Linie auf dem Display wird somit nur eine Projektion in die Horizontale für die Berechnung des Gesamtdrehwinkels verwendet.

Bei dem erfindungsgemäßen Verfahren ist die Art und Weise, wie die Objekte auf dem virtuellen Ring karussellartig gedreht werden, von besonderer Bedeutung. Von der Darstellung dieser Drehung hängt es nämlich ab, wie gut und wie schnell der Betrachter die auf dem virtuellen Ring dargestellten Objekte erfassen kann, auch wenn sie karussellartig gedreht werden. Dabei hat sich herausgestellt, dass viele Animationstechniken, die außerhalb des Kraftfahrzeugs bei der veränderlichen grafischen Darstellung von Objekten eingesetzt werden, für die Verwendung im Kraftfahrzeug ungeeignet sind, da im Kraftfahrzeug der Betrachter das Display nur für kurze Augenblicke betrachtet. Der zeitliche Verlauf der Veränderung einer Position eines grafisch dargestellten Objekts ist daher auch für die Sicherheit beim Führen des Fahrzeugs von besonderer Bedeutung.

Bei dem erfindungsgemäßen Verfahren werden bei der Berechnung der Grafikdaten für aufeinander folgende Zwischenbilder zur Darstellung der Drehung die aufeinander folgenden Drehwinkel $\alpha$ durch folgende Rechenschritte berechnet:

(i)

$$n = \frac{t}{d} - 1 \quad ;$$

(ii)

$$\alpha = b + \alpha_{Drehung} \cdot (1 - n^4) \quad ,$$

wobei
t eine Systemzeit ist, zu der die erzeugten Grafikdaten auf dem Display dargestellt werden, wobei zu Beginn der Drehung t = 0 ist,
d die Dauer der Gesamtdrehung ist,
b der Ausgangswinkel eines Objekts auf dem virtuellen Ring ist,
$\alpha_{Drehung}$ der Gesamtdrehwinkel ist und
wobei die Schritte (i) und (ii) so oft wiederholt werden, bis t größer als d ist.

Des Weiteren ist die Dauer der Gesamtdrehung, d. h. die Zeit von dem Ausgangswinkel eines Objekts zu dem Endwinkel, der vom Benutzer über die Eingabeeinrichtung definiert wird, von besonderer Bedeutung für Erfassbarkeit der dargestellten Information. Bei dem erfindungsgemäßen Verfahren ist die Dauer der Gesamtdrehung in einem Bereich von 2 Sekunden bis 3 Sekunden, bevorzugt in einem Bereich von 2,4 Sekunden bis 2,6 Sekunden. Besonders bevorzugt ist die Dauer der Gesamtdrehung 2,5 Sekunden.

Gemäß einer bevorzugten Weiterbildung des erfindungsgemäßen Verfahrens wird die Geschwindigkeit des Kraftfahrzeugs gemessen und die Dauer der Gesamtdrehung in Abhängigkeit von der Geschwindigkeit des Kraftfahrzeugs ermittelt. Bevorzugt ist die Dauer der Drehung umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Drehdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen

Gemäß einer bevorzugten Weiterbildung des erfindungsgemäßen Verfahrens kann ein Objekt mittels der Eingabeeinrichtung aktiviert werden, wobei nach der Aktivierung die anderen Objekte grafisch in den Hintergrund treten. Insbesondere kann jedes auf dem Display dargestellte Objekt mittels der Eingabeeinrichtung aktiviert werden. Es ist somit nicht erforderlich, dieses Objekt erst mittels der Eingabeeinrichtung nach vorne zu drehen, um es zu aktivieren. Nach einer Aktivierung eines Objekts wird vorzugsweise der virtuelle Ring bzw. die Objekte, die auf diesem Ring dargestellt werden, ausgeblendet und nur noch das aktivierte Objekt dargestellt. Beim Ausblenden des virtuellen Rings bzw. der darauf dargestellten Objekte und der alleinigen Darstellung des aktivierten Objekts wird beispielsweise das aktivierte Objekt, die anderen Objekte des Rings verdrängend, vergrößert, bis nur noch das aktivierte Objekt dargestellt wird.

Ferner führt in einem Darstellungszustand, bei dem nur noch das aktivierte Objekt dargestellt ist, eine Eingabe zum karussellartigen Drehen der Objekte dazu, dass das zuletzt aktivierte Objekt in die karussellartige Darstellung innerhalb der weiteren Objekte übergeht, sich die Objekte auf dem virtuellen Ring um eine Position karussellartig drehen, der virtuelle Ring wieder ausgeblendet wird und schließlich nur noch das nächste Objekt dargestellt wird. Diese Darstellungsveränderung bei der Wiedergabe der Objekte führt dazu, dass sich der Betrachter leichter innerhalb der Struktur der dargestellten Objekte orientieren kann, selbst wenn er die sich verändernde Darstellung jeweils nur für kurzzeitige Zeitintervalle betrachtet, wie es im Kraftfahrzeug häufig der Fall ist, wenn der Fahrer die Informationsdarstellung aufnimmt.

Gemäß einer noch weiteren Weiterbildung des erfindungsgemäßen Verfahrens wird nach einem karussellartigen Verschieben der Objekte auf dem virtuellen Ring nach Ablauf eines Zeitintervalls das im Vordergrund dargestellte Objekt automatisch aktiviert. Der Benutzer muss daher nur das zu aktivierende Objekt in den Vordergrund drehen. Der weitere Bedienschritt des Aktivierens kann entfallen, so dass der Benutzer nach dem Drehen des Objekts seinen Blick von dem Display abwenden kann und die Eingabeeinrichtung nicht weiter betätigen muss. Dies ist insbesondere bei dem Einsatz in einem Kraftfahrzeug vorteilhaft, da die Ablenkung eines Fahrers, der das Display betrachtet und die Eingabeeinrichtung bedient, auf ein Minimum reduziert wird.

Bei dem Objekt handelt es sich insbesondere um ein grafisches Fenster, in dem Informationen und/oder Steuerelemente der Benutzerschnittstelleneinrichtung dargestellt werden.

Gemäß einer bevorzugten Ausgestaltung des erfindungsgemäßen Verfahrens erfolgt die Eingabe durch eine Berührung des Displays. Gemäß einer anderen Ausgestaltung erfolgt die Eingabe durch eine Geste eines Körperteils eines Nutzers, welche vor dem Display ausgeführt wird. Die Geste wird von der Eingabeeinrichtung oder einer anderen nachgeschalteten Einrichtung erfasst und ausgewertet. Die Geste des Körperteils des Nutzers kann beispielsweise durch eine kapazitive Kopplung zwischen dem Körperteil und einer Empfangseinrichtung erfasst werden. Ferner kann die Geste des Körperteils des Nutzers durch eine Emission von Infrarotstrahlung und eine Reflektion dieser Infrarotstrahlung an dem Körperteil des Nutzers erfasst werden.

Vorzugsweise werden von zumindest einem Teil der Objekte Informationen von Fahrerassistenzsystemen dargestellt. Zu diesen Informationen gehören auch Warnhinweise, die möglichst schnell von dem Fahrer erfasst werden sollen. Dabei ist es beispielsweise möglich, dass Objekte, welche Warnhinweise enthalten, auf dem virtuellen Ring nach vorne gedreht werden und dann vergrößert auf dem Display dargestellt werden.

Die erfindungsgemäße Anzeigeeinrichtung ist dadurch gekennzeichnet, dass von der Benutzerschnittstelleneinrichtung Grafikdaten erzeugbar sind, die das Display so ansteuern, dass mehrere Objekte auf einem virtuellen, perspektivisch dargestellten Ring angeordnet dargestellt sind, und dass die Benutzerschnittstelleneinrichtung eine Recheneinheit umfasst, mit welcher in Abhängigkeit von einer Eingabe mittels der Eingabeeinrichtung die Grafikdaten so veränderbar sind, dass sich die Objekte auf dem virtuellen Ring karussellartig drehen.

Für die Bedienung durch einen Nutzer ist mittels der Eingabeeinrichtung eine Linie auf dem Display erfassbar. Mit der Recheneinheit kann aus der Länge dieser Linie wie vorstehend erläutert der Winkel berechnet werden, um den die Objekte gedreht werden sollen. Auch die Grafikdaten für aufeinander folgende Zwischenbilder für aufeinander folgende Drehwinkel $\alpha$ zur Darstellung der Drehung sind von der Recheneinheit wie vorstehend erläutert berechenbar. Die Dauer der Gesamtdrehung liegt dabei in einem Bereich von 2 Sekunden bis 3 Sekunden, insbesondere von 2,4 Sekunden bis 2,6 Sekunden und besonders bevorzugt bei 2,5 Sekunden.

Gemäß einer bevorzugten Weiterbildung der erfindungsgemäßen Anzeigeeinrichtung umfasst die Anzeigeeinrichtung eine Schnittstelle zum Empfang von Daten für die Geschwindigkeit des Kraftfahrzeugs. Mit der Recheneinheit ist in diesem Fall in Abhängigkeit von diesen Geschwindigkeitsdaten die Dauer der Gesamtdrehung ermittelbar.

Bei der Eingabeeinrichtung kann es sich um eine berührungsempfindliche Oberfläche eines Displays handeln. Bevorzugt ist die Eingabeeinrichtung eine Einrichtung zum Erfassen und Auswerten einer Geste eines Körperteils eines Nutzers, welche vor dem Display ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Kopplung kann die Position des Körperteils detektiert werden. Aus der zeitlichen Veränderung dieser Position kann auf eine Geste des Nutzers geschlossen werden.

Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Des Weiteren kann ein Annäherungssensor vorgesehen sein, mit welchem die Bedienabsicht eines Nutzers an Hand der Annäherung eines Körperteils des Nutzers detektiert wird.

Gemäß einer bevorzugten Ausgestaltung der erfindungsgemäßen Anzeigeeinrichtung ist die Benutzerschnittstelleneinrichtung mit zumindest einem Fahrerassistenzsystem gekoppelt. Die Grafikdaten sind in diesem Fall von der Benutzerschnittstelleneinrichtung so erzeugbar, dass von zumindest einem Teil der Objekte Informationen dieses Fahrerassistenzsystems darstellbar sind.

Die Erfindung wird nun an Hand eines Ausführungsbeispiels mit Bezug zu den Zeichnungen erläutert.

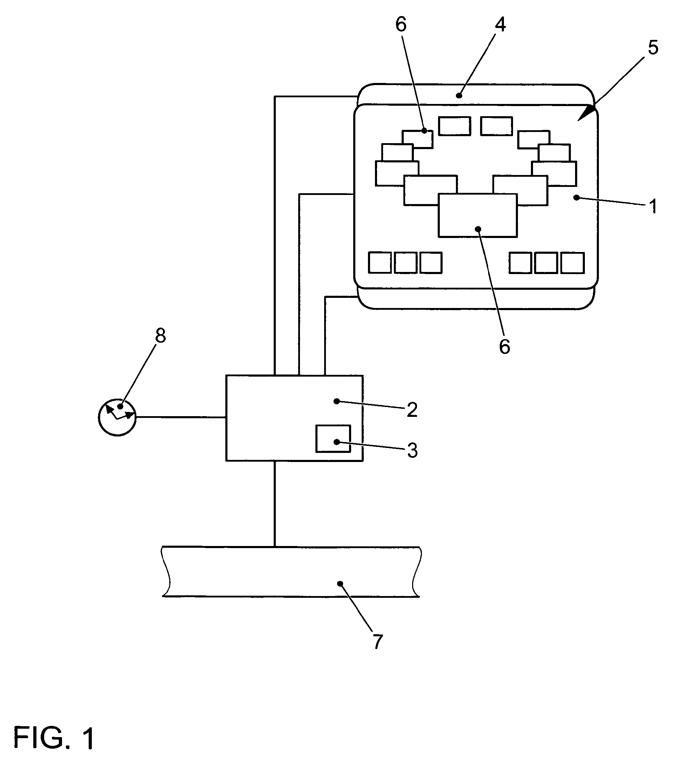

Figur 1 zeigt schematisch ein Ausführungsbeispiel der erfindungsgemäßen An- zeigeeinrichtung und die Koppelung dieser Anzeigeeinrichtung mit der Elektronik des Kraftfahrzeugs,

Figur 2 zeigt eine von dem erfindungsgemäßen Verfahren erzeugte Informations- anzeige in einem Kraftfahrzeug, bei der mehrere Objekte dargestellt wer- den,

Figur 3 zeigt eine von dem erfindungsgemäßen Verfahren erzeugte Informations- anzeige eines aktivierten Objekts,

Figur 4 zeigt die von dem erfindungsgemäßen Verfahren erzeugte Informations- anzeige eines anderen Objekts und

Figur 5 zeigt den zeitlichen Verlauf des Drehwinkels eines Objekts beim Drehen auf dem virtuellen Ring.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 7 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Benutzerschnittstelleneinrichtung 2 verbunden, mit welcher Grafikdaten für auf dem Display 1 darstellbare grafische Objekte erzeugbar sind. Ferner ist die Benutzerschnittstelleneinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 oder einem separaten Annäherungssensor erkannt und die Annäherung wird als Bedienabsicht interpretiert. Dies kann z. B. dazu führen, dass die von dem Display 1 angezeigten Objekte anders dargestellt werden. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Benutzerschnittstelleneinrichtung 2 ist ferner mit einer Systemuhr 8 und mit einem Fahrzeugbus 7 gekoppelt. Über den Fahrzeugbus 7 ist die Benutzerschnittstelleneinrichtung 2 mit Fahrerassistenzsystemen des Fahrzeugs verbunden. Die Benutzerschnittstelleneinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Benutzerschnittstelleneinrichtung 2 erzeugt hierfür Grafikdaten für auf dem Display 1 darstellbare Objekte, welche unter anderem die Informationen der Fahrerassistenzsysteme grafisch darstellen. Ferner ist die Benutzerschnittstelleneinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Benutzerschnittstelleneinrichtung 2 aufbereitet und in Grafikdaten für eine grafische Darstellung umgewandelt. Für Animationen der grafischen Darstellung auf dem Display umfasst die Benutzerschnittstelleneinrichtung eine Recheneinheit 3, welche beim Erzeugen von Zwischenbildern auf die Systemuhr 8 zurückgreift.

Im Folgenden wird die Informationsanzeige in dem Fahrzeug auf dem Display 1 im Detail erläutert:

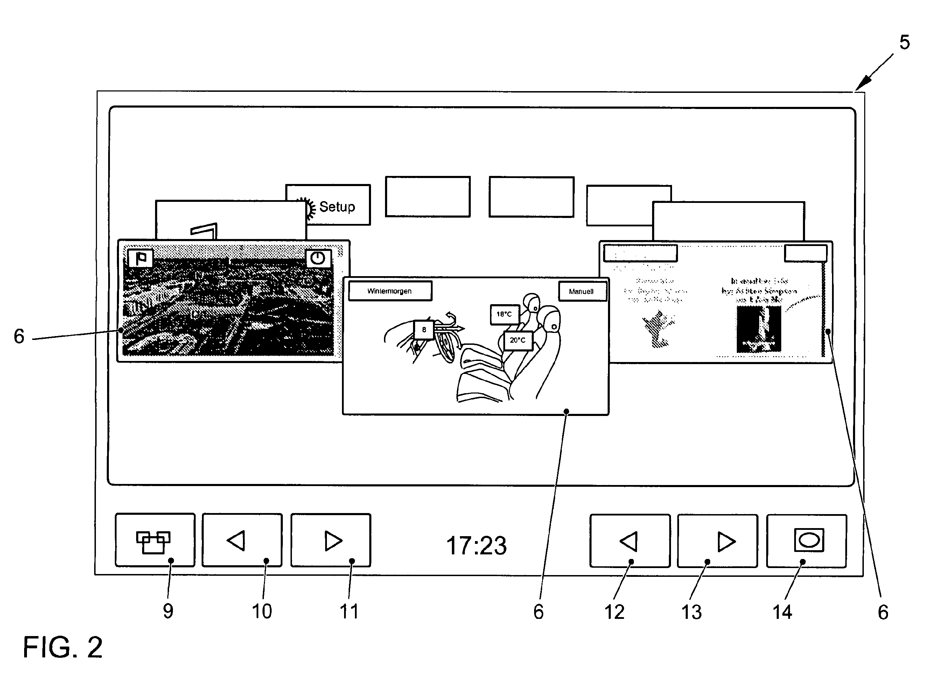

Die Grafikdaten, welche die Benutzerschnittstelleneinrichtung 2 für das Display 1 erzeugt, weisen eine hierarchische Struktur auf. Ausgangspunkt dieser hierarchischen Struktur ist die in Figur 2 gezeigte Ansicht des Displays 1 . Es ist die erste, hierarchisch am höchsten gelegene Ebene. Bei ihr werden mehrere Objekte auf einem virtuellen, perspektivisch dargestellten Ring 5 angeordnet dargestellt. Die perspektivische Darstellung zeigt den virtuellen Ring 5 so, als ob der Betrachter von schräg oben auf den Ring 5 schaut. Dabei wird ein Objekt 6 im Vordergrund in der perspektivischen Darstellung am größten dargestellt. Nach hinten werden weitere Objekte 6, zum Teil von vor ihnen befindlichen Objekten 6 verdeckt, dargestellt. Den Objekten 6 sind eine oder mehrere Einrichtungen des Fahrzeugs zugeordnet. Dabei stellen in der in Figur 2 gezeigten Anordnungen auf dem virtuellen Ring 5 die Objekte entweder nur einen Hinweis auf die zugeordnete Fahrzeugeinrichtung dar oder zusätzlich bereits Informationsinhalte dieser Einrichtung.

Bei der in Figur 2 gezeigten Ansicht betrifft das im Vordergrund dargestellte Objekt 6 die Steuerung der Klimatisierung des Fahrzeuginnenraums. Das Objekt rechts neben und hinter diesem Objekt 6 ist der Musikwiedergabeeinrichtung des Fahrzeugs zugeordnet und das Objekt links neben dem der Klimasteuerung zugeordneten Objekt 6 ist dem Navigationssystem des Fahrzeugs zugeordnet. Ein weiter hinten gelegenes Objekt betrifft die Einstellungen der Anzeigeeinrichtung selbst.

Unterhalb des perspektivisch dargestellten virtuellen Rings 5 befinden sich Schaltflächen zur Steuerung der von der Benutzerschnittstelleneinrichtung 2 erzeugten Grafikdaten für das Display 1. Mittels einer ersten Schaltfläche 9 kann der Benutzer in jedem Anzeigezustand zu dem Ausgangszustand zurückgelangen, bei dem die Objekte 6 auf dem virtuellen, perspektivisch dargestellten Ring 5 angeordnet dargestellt werden. Mit den Schaltflächen 10 und 11 können die Objekte 6 auf dem virtuellen Ring 5 um eine Position karussellartig im Uhrzeigersinn bzw. entgegen dem Uhrzeigersinn gedreht werden, wie es später im Detail erläutert wird. Mit den Schaltflächen 12 und 13 können Funktionen innerhalb eines Objekts 6 betätigt werden, und mit der Schaltfläche 14 kann der Benutzer z. B. direkt zu dem Einstellungsmenü für die Grafik gelangen.

Ausgehend von der in Figur 2 gezeigten Ansicht des Displays 1 kann jedes der auf dem virtuellen Ring 5 dargestellten Objekte 6 mittels der Eingabeeinrichtung 4 ausgewählt und aktiviert werden. Falls die Eingabeeinrichtung eine berührungsempfindliche Folie umfasst, kann der Nutzer z. B. mit seinem Finger auf das zu aktivierende Objekt 6 tippen. Erfasst die Eingabeeinrichtung 4 z. B. die Position des Fingers oder der Hand des Benutzers vor dem Display 1, reicht es aus, dass der Benutzer seinen Finger an die Position des Displays 1 annähert, bei welcher das zu aktivierende Objekt 6 dargestellt ist. Ist ein Objekt 6 mittels der Eingabeeinrichtung 4 aktiviert worden, wird in einem fließenden Übergang der virtuelle Ring 5 mit den darauf befindlichen Objekten 6 ausgeblendet und nur noch das aktivierte Objekt 6 dargestellt. Beim Ausblenden des virtuellen Rings 5 und der darauf befindlichen Objekte 6 bis zur alleinigen Darstellung des aktivierten Objekts 6, verdrängt das aktivierte Objekte 6 die anderen Objekte 6 des Rings und wird kontinuierlich vergrößert, bis nur noch das aktivierte Objekt 6 dargestellt wird. Die Grafikdaten für diesen fließenden Übergang werden von der Benutzerschnittstelleneinrichtung 2 berechnet. Beim Erzeugen der Zwischenbilder greift die Benutzerschnittstelleneinrichtung 2 dabei auf die Systemzeit 8 zurück, um sicherzustellen, dass die Animation fließend, ohne wackelnde Bewegungen wiedergegeben wird.

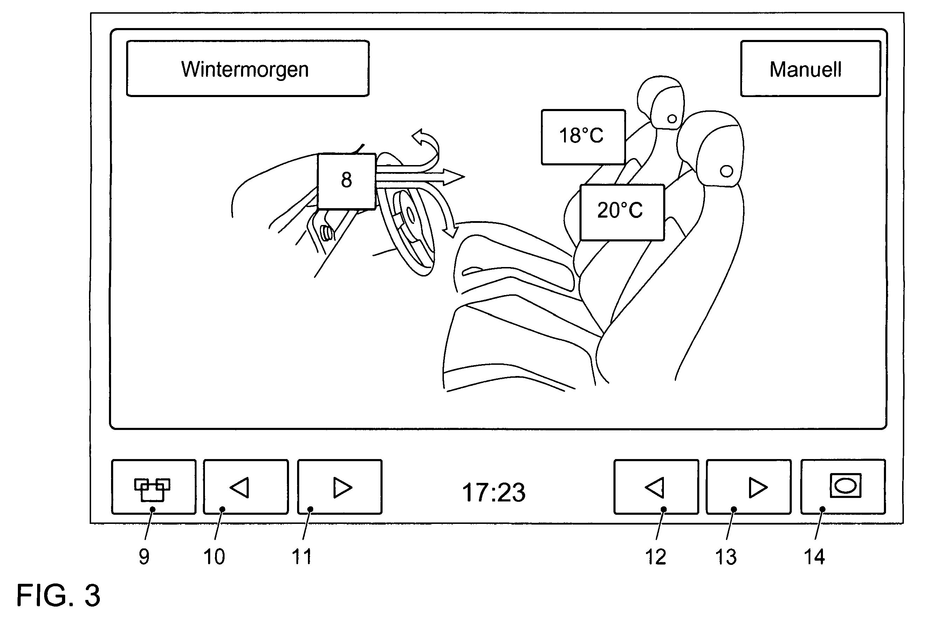

In Figur 3 ist beispielsweise eine Ansicht des Displays 1 gezeigt, die bei einer Aktivierung des der Klimasteuerung zugeordneten Objekts 6 angezeigt wird. In diesem Fall wird die in Figur 2 gezeigte Darstellung des Objekts 6 für die Klimasteuerung vergrößert dargestellt. Die Schaltflächen 9 bis 14 bleiben dabei erhalten. Betätigt der Benutzer aus der von dieser in Figur 3 gezeigten Ansicht die Schaltfläche 9, wird die Darstellung des Objekts 6 für die Klimasteuerung kontinuierlich verkleinert, die weiteren Objekte 6 des virtuellen Rings 5 tauchen wieder auf, bis die in Figur 2 gezeigte Ansicht dargestellt wird.

Wird andererseits die Schaltfläche 10 bzw. 11 betätigt, wird gleichermaßen das Objekt 6 für die Klimasteuerung verkleinert und die weiteren Objekte 6 des virtuellen Rings 5 werden wieder wie in Figur 2 dargestellt angezeigt. Daraufhin wird jedoch der virtuelle Ring 5 karussellartig im Uhrzeigersinn bzw. entgegen dem Uhrzeigersinn zur nächsten Position gedreht, woraufhin automatisch das nun im Vordergrund stehende nächste Objekt 6 aktiviert wird und in einem fließenden Übergang die anderen Objekte 6 verdrängend vergrößert dargestellt wird, bis nur noch dieses nächste Objekt 6 dargestellt ist.

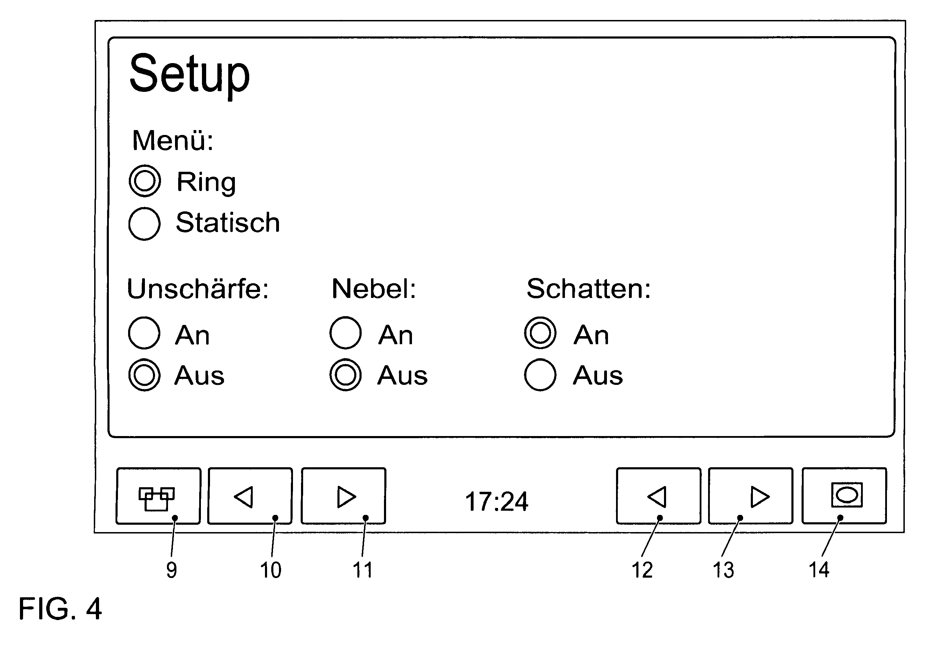

In Figur 4 ist das den Einstellungen der Grafik selbst zugeordnete Objekt 6 dargestellt. Bei der Aktivierung dieses Objekts 6 können mittels der Eingabeeinrichtung 4 verschiedene Einstellungen für die grafische Wiedergabe vorgenommen werden.

Bei dem vorstehend beschriebenen Verfahren zum Anzeigen der in einer hierarchischen Struktur organisierten Informationsmenge ist der Übergang zwischen zwei statischen Darstellungen auf dem Display 1 von besonderer Bedeutung. Da die Anzeigeeinrichtung nämlich in einem Kraftfahrzeug untergebracht ist, ist es besonders wichtig, dass insbesondere der Fahrer des Kraftfahrzeugs die auf dem Display 1 dargestellten Informationen schnell, einfach und intuitiv erfassen kann, selbst wenn er nur für kurze Zeitintervalle seinen Blick auf das Display 1 richtet. Dabei ist es besonders wichtig, dass sich der Betrachter jederzeit gut innerhalb der hierarchischen Struktur orientieren kann. Es hat sich ergeben, dass abrupte Wechsel von Anzeigebildern hierfür nachteilhaft sind. Es hat sich insbesondere herausgestellt, dass fließende Übergänge zwischen zwei statischen Darstellungen, bei denen Zwischenbilder angezeigt werden, welche den Übergang zwischen den zwei statischen Darstellungen verdeutlichen, die Orientierung in der Struktur sowie die Erfassbarkeit des Informationsinhalts erleichtern.

Ferner ist besonders wichtig, wie die Zwischenbilder den Übergang zwischen zwei statischen Darstellungen visualisieren. Dabei hat sich herausgestellt, dass ein linearer Übergang von einer statischen Darstellung zur nächsten statischen Darstellung bei der Anwendung in einem Kraftfahrzeug nicht geeignet ist. Vielmehr sind Zwischenbilder von Vorteil, welche eine Bewegung der Objekte 6 veranschaulichen, die zumindest zum Teil abgebremst wird,. Auch sind die Parameter für die Wahl der Abbremsung und die Dauer des Übergangs an die Anwendung im Fahrzeug anzupassen, so dass herkömmliche, aus dem Computerbereich bekannte Animationen zumeist nicht verwendbar sind.

Im Folgenden wird im Detail beschrieben, wie der Benutzer mittels der Eingabeeinrichtung 4 die auf dem virtuellen Ring 5 angeordneten Objekte 6 karussellartig auf diesem virtuellen Ring 5 drehen kann.

Der Ausgangspunkt der Drehung ist die in Figur 2 gezeigte Anordnung der Objekte 6 auf dem virtuellen Ring 5. Der Benutzer gibt nun zunächst über die Eingabeeinrichtung 4 den Gesamtdrehwinkel $\alpha_{Drehung}$ vor, um den die Objekte 6 auf dem Ring 5 gedreht werden sollen. Hierfür gibt der Benutzer z. B. mittels der Eingabeeinrichtung 4 eine Linie auf dem Display 1 ein. Umfasst die Eingabeeinrichtung 4 eine berührungsempfindliche Folie, kann der Benutzer mit seinem Finger über die Folie fahren, um diese Linie vorzugeben. Falls die Eingabeeinrichtung 4 eine Geste des Benutzers bzw. eine Bewegung seiner Hand oder seines Fingers vor dem Display 1 erfassen kann, wird auf diese Weise die Eingabe der Linie vorgenommen. Falls die Linie nicht in Richtung der Breite des Displays 1 ausgerichtet ist, sondern schräg verläuft, wird bevorzugt nur die Länge der parallel zur Breite des Displays 1 ausgerichtete Horizontalkomponente der eingegebenen Linie verwendet. Aus dem Verhältnis der Länge dieser Horizontalkomponente der Linie zu der Gesamtbreite des Displays 1 wird der Gesamtdrehwinkel $\alpha_{Drehung}$ berechnet, wobei eine volle Umdrehung einer Linie entspricht, deren Länge gleich der Breite des Displays 1 ist. Der Gesamtdrehwinkel $\alpha_{Drehung}$ wird somit wie folgt berechnet:

$$\alpha_{Drehung} = \frac{S}{B} \cdot 360° \qquad ,$$

wobei der Gesamtdrehwinkel $\alpha_{Drehung}$ in Grad angegeben wird, S die Länge der mittels der Eingabeeinrichtung definierten Linie bzw. die Horizontalkomponente davon ist und B die Breite des Displays ist. Der Drehwinkel $\alpha$ bezieht sich dabei auf den virtuellen Ring 5. Tatsächlich werden die Objekte 6 bei der perspektivischen Darstellung auf dem Display 1 nur in der Ebene des Displays 1 verschoben. Der Drehwinkel $\alpha$ wird somit bei dem Erzeugen der Grafikdaten durch die Benutzerschnittstelleneinrichtung 2 entsprechend transformiert.

Ist die Eingabeeinrichtung 4 ein abgesetztes Bedienelement mit einem Drehgeber, kann der Gesamtdrehwinkel auch über den Drehwinkel des Drehgebers eingegeben werden.

Nachdem der Gesamtdrehwinkel $\alpha_{Drehung}$ mittels der Eingabeeinrichtung 4 vom Benutzer eingegeben worden ist, wird von einer Recheneinheit 3 der Benutzerschnittstelleneinrichtung 2 eine Animation erzeugt, welche die Grafikdaten für aufeinander folgende Zwischenbilder umfasst, welche aufeinander folgende Drehwinkel $\alpha$ für die Objekte 6 wiedergeben. Der Übergang von dem Ausgangszustand mit einem Ausgangswinkel der Objekte zu einem Endzustand, bei dem die Objekte um den gesamten Winkel $\alpha_{Drehung}$ gedreht worden sind, erfolgt dabei durch eine abgebremste Bewegung, welche mittels folgender Rechenschritte berechnet ist:

(i)

$$n = \frac{t}{d} - 1 \qquad ;$$

(ii)

$$\alpha = b + \alpha_{Drehung} \cdot (1 - n^4) \qquad .$$

Dabei ist t die Systemzeit, die von der Recheneinheit 3 von der Systemuhr 8 abgerufen wird. Zu Beginn der Drehung ist die Systemzeit gleich null. Im Endzustand der Drehung entspricht die Systemzeit t der Dauer d der Gesamtdrehung. Die Schritte (i) und (ii) werden dabei so oft wiederholt, bis die Systemzeit t größer als die Dauer d der Gesamtdrehung ist.

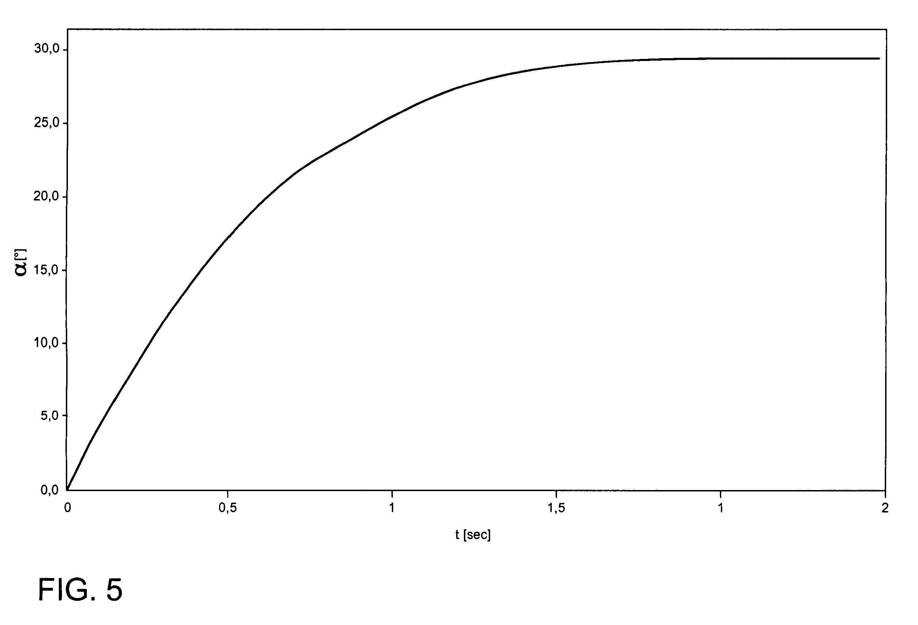

Von besonderer Bedeutung für die Anwendung des vorstehend beschriebenen Verfahrens in einem Fahrzeug ist die Wahl der Dauer der Gesamtdrehung. Die Dauer d der Gesamtdrehung ist in einem Bereich von 2 Sekunden bis 3 Sekunden, insbesondere in einem Bereich von 2,4 Sekunden bis 2,6 Sekunden. Besonders bevorzugt ist die Dauer d der Gesamtdrehung 2,5 Sekunden. In Figur 5 ist der zeitliche Verlauf des Drehwinkels $\alpha$ für die Zwischenbilder gezeigt, wenn ein Objekt 6 um den Gesamtdrehwinkel $\alpha_{Drehung}$ von 30° in 2,5 Sekunden gedreht wird. Es zeigt sich, dass die Drehgeschwindigkeit zunächst relativ schnell ist und dann abgebremst wird.

Bei dem vorliegenden Ausführungsbeispiel wird außerdem der Gesamtdrehwinkel $\alpha_{Drehung}$ auf einen Drehwinkel angepasst, welcher einer karussellartigen Drehung der Objekte 6 auf dem virtuellen Ring 5 entspricht, bei dem im Endzustand ein Objekt 6, wie in Figur 2 gezeigt, im Vordergrund erscheint. Der vom Benutzer über die Eingabeeinrichtung 4 eingegebene Drehwinkel wird somit auf diese diskreten Drehwinkel auf- oder abgerundet.

Wird ein Objekt von dem Benutzer mittels der Eingabeeinrichtung 4 in den Vordergrund gedreht, wird dieses Objekt 6 nach Ablauf eines Zeitintervalls automatisch aktiviert. Somit wird dieses Objekt 6 nach dem Ablauf des Zeitintervalls vergrößert, wobei gleichzeitig der virtuelle Ring 5 mit den anderen Objekten 6 verschwindet, bis nur noch das aktivierte Objekt 6 dargestellt wird.

Gemäß einer Weiterbildung des Ausführungsbeispiels werden in der Benutzerschnittstelleneinrichtung 2 und damit der Recheneinheit 3 über den Fahrzeugbus 7 die Daten des Geschwindigkeitsmessers des Kraftfahrzeugs übertragen. Diese Daten werden von der Recheneinheit 3 verwendet, um die Dauer der Drehung zu ermitteln. Dabei ist die Dauer der Gesamtdrehung umso länger, je höher die Geschwindigkeit des Kraftfahrzeugs ist.

**BEZUGSZEICHENLISTE**

| | |
|---|---|
| 1 | Display |
| 2 | Benutzerschnittstelleneinrichtung |
| 3 | Recheneinheit |
| 4 | Eingabeeinrichtung |
| 5 | virtueller Ring |
| 6 | grafische Objekte |
| 7 | Fahrzeugbus |
| 8 | Systemuhr |
| 9-14 | Schaltflächen eines Objekts 6 |

**Patentansprüche**

1. Verfahren zum Anzeigen von Informationen in einem Kraftfahrzeug, bei dem

   - mehrere aktivierbare Objekte (6) mittels eines in dem Kraftfahrzeug befestigten Displays (1) grafisch dargestellt werden,
   - in einem Darstellungszustand, bei dem nur noch ein aktiviertes grafisches Objekt (6) dargestellt ist, mittels einer Eingabeeinrichtung (4) eine Eingabe erfolgt,
   - auf die Eingabe mittels der Eingabeeinrichtung (4) von einer Benutzerschnittstelleneinrichtung (2) Grafikdaten erzeugt werden, die das Display (1) so ansteuern, dass das zuletzt aktivierte grafische Objekt (6) in eine Darstellung übergeht, bei der die grafischen Objekte (6) auf einem virtuellen, perspektivisch dargestellten Ring (5) angeordnet dargestellt werden,
   - wobei eine Recheneinheit (3) der Benutzerschnittstelleneinrichtung (2) die Grafikdaten so verändert, dass sich die Objekte (6) auf dem virtuellen Ring (5) um eine Position karussellartig drehen,
   - der virtuelle Ring (5) wieder ausgeblendet wird und
   - schließlich nur noch das nächste grafische Objekt (6) dargestellt wird.

2. Verfahren nach Anspruch 1,
   **dadurch gekennzeichnet,**
   **dass** mittels der Eingabeeinrichtung (4) eine Linie auf dem Display (1) eingegeben wird und dass der Winkel, um den die Objekte (6) gedreht werden, wie folgt berechnet wird:

$$\alpha_{Drehung} = \frac{S}{B} \cdot 360° \quad ,$$

wobei
$\alpha_{Drehung}$ der Gesamtdrehwinkel in Grad ist,
S die Länge der mittels der Eingabeeinrichtung (4) definierten Linie ist und B die Breite des Displays (1) ist.

3. Verfahren nach Anspruch 2,
   **dadurch gekennzeichnet,**
   **dass** von der mittels der Eingabeeinrichtung (4) definierten Linie nur die Länge der parallel zur Breite des Displays (1) ausgerichtete Horizontalkomponente für den Parameter S verwendet wird.

4. Verfahren nach einem der vorstehenden Ansprüche,
   **dadurch gekennzeichnet,**
   **dass** bei der Berechnung der Grafikdaten für aufeinander folgende Zwischenbilder zur Darstellung der Drehung die aufeinander folgenden Drehwinkel $\alpha$ durch folgende Rechenschritte berechnet werden:

   (i)

$$n = \frac{t}{d} - 1 \quad ;$$

   (ii)

$$\alpha = b + \alpha_{Drehung} \cdot (1 - n^4) \quad ,$$

wobei
t eine Systemzeit ist, zu der die erzeugten Grafikdaten auf dem Display (1) dargestellt werden, wobei zu Beginn der Drehung t = 0 ist,
d die Dauer der Gesamtdrehung ist,
b der Ausgangswinkel eines grafischen Objekts (6) auf dem virtuellen Ring (5) ist,
$\alpha_{Drehung}$ der Gesamtdrehwinkel ist und
wobei die Schritte (i) und (ii) so oft wiederholt werden, bis t größer als d ist.

5. Verfahren nach einem der vorstehenden Ansprüche,
   **dadurch gekennzeichnet,**
   **dass** die Dauer der Gesamtdrehung in einem Bereich von 2 Sekunden bis 3 Sekunden ist, insbesondere in einem Bereich von 2,4 Sekunden bis 2,6 Sekunden ist, und bevorzugt ist die Dauer der Gesamtdrehung 2,5 Sekunden.

6. Verfahren nach einem der vorstehenden Ansprüche,
   **dadurch gekennzeichnet,**
   **dass** die Geschwindigkeit des Kraftfahrzeugs gemessen wird, und dass die Dauer der Gesamtdrehung in Abhängigkeit von der Geschwindigkeit des Kraftfahrzeugs ermittelt wird.

7. Verfahren nach einem der vorangegangenen Ansprüche,
**dadurch gekennzeichnet,**
**dass** beim Ausblenden des virtuellen Rings (5) und der alleinigen Darstellung des aktivierten grafischen Objekts (6) das aktivierte grafische Objekt (6), die anderen grafischen Objekte (6) des Rings (5) verdrängend, vergrößert wird, bis nur noch das aktivierte grafische Objekt (6) grafisch dargestellt wird.

8. Anzeigeeinrichtung für ein Kraftfahrzeug mit

- einem Display (1) zur grafischen Darstellung von Informationen, das in dem Kraftfahrzeug befestigt ist,
- einer Benutzerschnittstelleneinrichtung (2), mit welcher Grafikdaten für auf dem Display (1) darstellbare grafische Objekte (6) erzeugbar sind, und
- einer mit der Benutzerschnittstelleneinrichtung (2) gekoppelten Eingabeeinrichtung (4),
**dadurch gekennzeichnet,**
- **dass** von der Benutzerschnittstelleneinrichtung (2) Grafikdaten erzeugbar sind, die das Display (1) so ansteuern, dass mehrere aktivierbare grafische Objekte (6) auf einem virtuellen, perspektivisch dargestellten Ring (5) angeordnet dargestellt sind, und
- **dass** die Benutzerschnittstelleneinrichtung (2) eine Recheneinheit (3) umfasst, mit welcher in Abhängigkeit von einer Eingabe mittels der Eingabeeinrichtung (4) die Grafikdaten so veränderbar sind, dass sich die grafischen Objekte (6) auf dem virtuellen Ring (5) karussellartig drehen
- wobei in einem Darstellungszustand, bei dem nur noch das aktivierte grafische Objekt (6) dargestellt ist, bei einer Eingabe zum karussellartigen Drehen der Objekte (6) das zuletzt aktivierte grafische Objekt (6) in die karussellartige Darstellung innerhalb der weiteren grafischen Objekte (6) übergeht, sich die grafischen Objekte (6) auf dem virtuellen Ring (5) um eine Position karussellartig drehen, der virtuelle Ring (5) wieder ausgeblendet wird und schließlich nur noch das nächste grafische Objekt (6) dargestellt wird.

9. Anzeigeeinrichtung nach Anspruch 8,
**dadurch gekennzeichnet,**
**dass** mittels der Eingabeeinrichtung (4) eine Linie auf dem Display (1) erfassbar ist und dass die Recheneinheit (3) den Winkel, um den die grafischen Objekte (6) gedreht werden, wie folgt berechnet:

$$\alpha_{Drehung} = \frac{S}{B} \cdot 360° \quad ,$$

wobei
$\alpha_{Drehung}$ der Gesamtdrehwinkel in Grad ist,
S die Länge der mittels der Eingabeeinrichtung (4) definierten Linie ist und
B die Breite des Displays (1) ist.

10. Anzeigeeinrichtung nach Anspruch 8 oder 9,
**dadurch gekennzeichnet,**
**dass** die Grafikdaten für aufeinander folgende Zwischenbilder für aufeinander folgende Drehwinkel $\alpha$ zur Darstellung der Drehung von der Recheneinheit (3) durch folgende Rechenschritte berechenbar sind:

(i)

$$n = \frac{t}{d} - 1 \quad ;$$

(ii)

$$\alpha = b + \alpha_{Drehung} \cdot (1 - n^4) \quad ,$$

wobei
t eine Systemzeit ist, zu der die erzeugten Grafikdaten auf dem Display (1) dargestellt werden, wobei zu Beginn der Drehung t = 0 ist,
d die Dauer der Gesamtdrehung ist,
b der Ausgangswinkel eines grafischen Objekts (6) auf dem virtuellen Ring (5) ist,
$\alpha_{Drehung}$ der Gesamtdrehwinkel ist und
wobei die Schritte (i) und (ii) so oft wiederholt werden, bis t größer als d ist.

11. Anzeigeeinrichtung nach einem der Ansprüche 8 bis 10,
**dadurch gekennzeichnet,**
**dass** die Anzeigeeinrichtung eine Schnittstelle zum Empfang von Daten für die Geschwindigkeit des Kraftfahrzeugs umfasst und dass mit der Recheneinheit (3) in Abhängigkeit von diesen Geschwindigkeitsdaten die Dauer der Gesamtdrehung und/oder die Dauer der Drehung ermittelbar ist.

## Claims

1. Method for displaying information in a motor vehicle, in which

   - a plurality of objects (6) which can be activated are displayed graphically by means of a display (1) which is mounted in the motor vehicle,
   - an input is made in a display state in which just one activated graphic object (6) is still displayed by means of an input device (4),
   - graphic data, which actuate the display (1) in such a way that the graphic object (6) activated last changes into a display in which the graphic objects (6) are displayed arranged on a virtual ring (5) which is displayed in perspective, are generated in response to the input by means of the input device (4) from a user interface device (2),
   - wherein a computation unit (3) of the user interface device (2) changes the graphic data in such a way that the objects (6) on the virtual ring (5) rotate in the manner of a carousel around a position,
   - the virtual ring (5) is removed from the display again, and
   - finally only the next graphic object (6) is then displayed.

2. Method according to Claim 1, **characterized in that** a line on the display (1) is input by means of the input device (4), and in that the angle through which the objects (6) are rotated is calculated as follows:

$$\alpha_{\text{rotation}} = \frac{S}{B} \cdot 360° \quad ,$$

   where
   $\alpha_{\text{rotation}}$ is the overall angle of rotation in degrees,
   S is the length of the line defined by means of the input device (4), and
   B is the width of the display (1).

3. Method according to Claim 2, **characterized in that** only the length of the horizontal component which is oriented parallel to the width of the display (1) is used for the parameter S by the line defined by means of the input device (4).

4. Method according to one of the preceding claims, **characterized in that**, during the calculation of the graphic data for successive intermediate images for displaying the rotation, the successive angles of rotation $\alpha$ are calculated by means of the following computational steps:

   (i)

$$n = \frac{t}{d} - 1 \quad ;$$

   (ii)

$$\alpha = b + \alpha_{\text{rotation}} \cdot (1 - n^4) \quad ,$$

   where
   t is a system time at which the generated graphic data are displayed on the display (1), wherein t = 0 at the start of the rotation,
   d is the duration of the overall rotation,
   b is the initial angle of a graphic object (6) on the virtual ring (5),
   $\alpha_{\text{rotation}}$ is the overall angle of rotation, and
   wherein the steps (i) and (ii) are repeated until t is greater than d.

5. Method according to one of the preceding claims, **characterized in that** the duration of the overall rotation is in a range from 2 seconds to 3 seconds, in particular in a range from 2.4 seconds to 2.6 seconds, and the duration of the overall rotation is preferably 2.5 seconds.

6. Method according to one of the preceding claims, **characterized in that** the speed of the motor vehicle is measured, and in that the duration of the overall rotation is determined as a function of the speed of the motor vehicle.

7. Method according to one of the preceding claims, **characterized in that** when the virtual ring (5) is removed from the display and the activated graphic object (6) is displayed alone, the activated graphic object (6) is enlarged in a way which pushes aside the other graphic objects (6) of the ring (5) until only the activated graphic object (6) is displayed graphically.

8. Display device for a motor vehicle, having

   - a display (1) which has the purpose of graphically displaying information and is mounted in the motor vehicle,
   - a user interface device (2) with which graphic data can be generated for graphic objects (6) which can be displayed on the display (1), and
- an input device (4) which is coupled to the user interface device (2),

**characterized**

- **in that** the user interface device (2) can generate graphic data which actuate the display (1) in such a way that a plurality of graphic objects (6) which can be activated are displayed arranged on a virtual ring (5) which is displayed in perspective, and

- **in that** the user interface device (2) comprises a computation unit (3) with which the graphic data can be varied as a function of an input by means of the input device (4) in such a way that the graphic objects (6) rotate in the manner of a carousel on the virtual ring (5),

- wherein when an input is made in a display state in which only the activated graphic object (6) is still displayed, in order to bring about carousel-like rotation of the objects (6) the graphic object (6) activated last changes into the carousel-like display within the further graphic objects (6), the graphic objects (6) on the virtual ring (5) rotate in the manner of a carousel around a position, the virtual ring (5) is removed from the display again, and finally only the next graphic object (6) is still displayed.

9. Display device according to Claim 8,
   **characterized**
   **in that** a line on the display (1) can be perceived by means of the input device (4), and in that the computation unit (3) calculates the angle through which the graphic objects (6) are rotated, as follows:

$$\alpha_{rotation} = \frac{S}{B} \cdot 360°$$ ,

where
$\alpha_{rotation}$ is the overall angle of rotation in degrees,
S is the length of the line defined by means of the input device (4), and
B is the width of the display (1).

10. Display device according to Claim 8 or 9,
    **characterized**
    **in that** the graphic data for successive intermediate images for successive angles of rotation $\alpha$ for displaying the rotation can be calculated by the computation unit (3) by means of the following computational steps:

    (i)

$$n = \frac{t}{d} - 1 \quad ;$$

    (ii)

$$\alpha = b + \alpha_{rotation} \cdot (1 - n^4) \quad ,$$

where
t is a system time at which the generated graphic data are displayed on the display (1), wherein t = 0 at the start of the rotation,
d is the duration of the overall rotation,
b is the initial angle of a graphic object (6) on the virtual ring (5),
$\alpha_{rotation}$ is the overall angle of rotation, and
wherein the steps (i) and (ii) are repeated until t is greater than d.

11. Display device according to one of Claims 8 to 10,
    **characterized**
    **in that** the display device comprises an interface for receiving data for the speed of the motor vehicle and in that the duration of the overall rotation and/or the duration of the rotation can be determined with the computation unit (3) as a function of these speed data.

**Revendications**

1. Procédé d'affichage d'informations dans un véhicule automobile, dans lequel

   - plusieurs objets activables (6) sont représentés graphiquement au moyen d'un afficheur (1) fixé dans le véhicule automobile,
   - dans un état de représentation dans lequel seul un objet graphique activé (6) est représenté, une saisie est effectuée au moyen d'un dispositif de saisie (4),
   - à la saisie au moyen du dispositif de saisie (4), il est généré par un dispositif d'interface d'utilisateur (2) des données graphiques qui commandent l'afficheur (1) de manière à ce que l'objet graphique (6) activé en dernier passe dans une représentation dans laquelle les objets graphiques (6) sont représentés disposés sur un anneau virtuel (5) représenté en perspective,
   - une unité de calcul (3) du dispositif d'interface d'utilisateur (2) modifiant les données graphiques de manière à ce que les objets (6) tournent sur l'anneau virtuel (5) autour d'une position à la manière d'un manège,

- l'anneau virtuel (5) est de nouveau occulté et
- finalement seul l'objet graphique suivant (6) est représenté.

2. Procédé selon la revendication 1, **caractérisé en ce que**, au moyen du dispositif de saisie (4), une ligne est saisie sur l'afficheur (1) et que l'angle selon lequel les objets (6) sont tournés est calculé comme suit :

$$\alpha_{rotation} = \frac{S}{B} \cdot 360°$$

$\alpha_{rotation}$ étant l'angle de rotation total en degrés,
S étant la longueur de la ligne définie au moyen du dispositif de saisie (4) et
B étant la largeur de l'afficheur (1).

3. Procédé selon la revendication 2, **caractérisé en ce que**, sur la ligne définie au moyen du dispositif de saisie (4), seule la longueur de la composante horizontale orientée parallèlement à la largeur de l'afficheur (1) est utilisée pour le paramètre S.

4. Procédé selon l'une quelconque des revendications précédentes, **caractérisé en ce que**, lors du calcul des données graphiques pour les images intermédiaires successives, pour représenter la rotation, les angles de rotation $\alpha$ successifs sont calculés par les étapes de calcul suivantes :

(i)

$$n = \frac{t}{d} - 1 \quad ;$$

(ii)

$$\alpha = b + \alpha_{rotation} \cdot (1 - n^4) \quad ;$$

t étant un temps de système auquel les données graphiques générées sont représentées sur l'afficheur (1), sachant que t = 0 au début de la rotation,
d étant la durée de la rotation complète,
b étant l'angle de départ d'un objet graphique (6) sur l'anneau virtuel (5),
$\alpha_{rotation}$ étant l'angle de rotation total et

les étapes (i) et (ii) étant répétées autant de fois qu'il le faut pour que t soit supérieur à d.

5. Procédé selon l'une quelconque des revendications précédentes, **caractérisé en ce que** la durée de la rotation complète se situe dans une plage de 2 secondes à 3 secondes, notamment dans une plage de 2,4 secondes à 2,6 secondes, et la durée de la rotation complète est de préférence de 2,5 secondes.

6. Procédé selon l'une quelconque des revendications précédentes, **caractérisé en ce que** la vitesse du véhicule automobile est mesurée et que la durée de la rotation complète est déterminée en fonction de la vitesse du véhicule automobile.

7. Procédé selon l'une quelconque des revendications précédentes, **caractérisé en ce que**, lors de l'occultation de l'anneau virtuel (5) et de l'unique représentation de l'objet graphique activé (6), l'objet graphique activé (6) est agrandi en refoulant les autres objets graphiques (6) de l'anneau (5) jusqu'à ce que seul l'objet graphique activé (6) soit représenté graphiquement.

8. Dispositif d'affichage pour un véhicule automobile comportant :

- un afficheur (1) servant à la représentation graphique d'informations, qui est fixé dans le véhicule automobile,
- un dispositif d'interface d'utilisateur (2) qui permet de générer des données graphiques pour des objets graphiques (6) qui peuvent être représentés sur l'afficheur (1) et
- un dispositif de saisie (4) couplé au dispositif d'interface d'utilisateur (2), **caractérisé en ce que**
- il peut être généré par le dispositif d'interface d'utilisateur (2) des données graphiques qui commandent l'afficheur (1) de manière à ce que plusieurs objets graphiques activables (6) soient représentés disposés sur un anneau virtuel (5) représenté en perspective et
- que le dispositif d'interface d'utilisateur (2) comprend une unité de calcul (3) grâce à laquelle, en fonction d'une saisie au moyen du dispositif de saisie (4), les données graphiques sont modifiables de manière à ce que les objets graphiques (6) tournent sur l'anneau virtuel (5) à la manière d'un manège,
- dans un état de représentation, dans lequel seul l'objet graphique activé (6) est représenté, lors d'une saisie dans le but de faire tourner les objets (6) à la manière d'un manège, l'objet graphique (6) activé en dernier passant dans la représentation semblable à un manège au sein des autres objets graphiques (6), les objets graphiques (6) tournant autour d'une position à la manière d'un manège sur l'anneau virtuel (5), l'anneau virtuel (5) étant à nouveau occulté et enfin seul l'objet graphique suivant (6) étant représenté.

9. Dispositif d'affichage selon la revendication 8, **caractérisé en ce que**,
au moyen du dispositif de saisie (4), une ligne peut être détectée sur l'afficheur (1) et que l'unité de calcul (3) calcule l'angle selon lequel les objets graphiques (6) sont tournés comme suit:

$$\alpha_{rotation} = \frac{S}{B} \cdot 360°$$

$\alpha_{rotation}$ étant l'angle de rotation total en degrés,
S étant la longueur de la ligne définie au moyen du dispositif de saisie (4) et
B étant la largeur de l'afficheur (1).

10. Dispositif d'affichage selon la revendication 8 ou 9, **caractérisé en ce que**
les données graphiques pour les images intermédiaires successives des angles de rotation successifs α, pour représenter la rotation, peuvent être calculées par l'unité de calcul (3) par les étapes de calcul suivantes :

(i)

$$n = \frac{t}{d} - 1 \quad ;$$

(ii)

$$\alpha = b + \alpha_{rotation} \cdot (1 - n^4) \quad ;$$

t étant un temps de système auquel les données graphiques générées sont représentées sur l'afficheur (1), sachant que t = 0 au début de la rotation,
d étant la durée de la rotation complète,
b étant l'angle de départ d'un objet graphique (6) sur l'anneau virtuel (5),
$\alpha_{rotation}$ étant l'angle de rotation total et

les étapes (i) et (ii) étant répétées autant de fois qu'il le faut pour que t soit supérieur à d.

11. Dispositif d'affichage selon l'une quelconque des revendications 8 à 10,
**caractérisé en ce que**
le dispositif d'affichage comprend une interface pour la réception de données pour la vitesse du véhicule automobile et que la durée de la rotation complète et/ou la durée de la rotation peu(ven)t être déterminée(s) à l'aide de l'unité de calcul (3) en fonction de ces données de vitesse.

FIG. 1

FIG. 2

EP 2 181 013 B1

Setup

Wintermorgen          Manuell

18°C

8

20°C

17:23

FIG. 3

Wintermorgen

Manuell

18°C

20°C

8

17:23

9    10    11

12    13    14

EP 2 181 013 B1

# Setup

Menü:

◎ Ring

○ Statisch

| Unschärfe: | Nebel: | Schatten: |
|---|---|---|
| ○ An | ○ An | ◎ An |
| ◎ Aus | ◎ Aus | ○ Aus |

| 🔲 | ◁ | ▷ | 17:24 | ◁ | ▷ | ▣ |

9    10    11       12   13   14

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10001988 A1
- DE 10303792 A1
- DE 19941955 A1
- WO 2006108617 A2
- DE 10058244 C2
- DE 10305341 A1
- DE 102004048956 A1
- EP 1212208 B1